# EUROPÄISCHE PATENTSCHRIFT

(11) **EP 3 015 634 B1**
(45) Veröffentlichungstag und Bekanntmachung des Hinweises auf die Patenterteilung: **13.01.2021**
(21) Anmeldenummer: 15188148.9
(22) Anmeldetag: 02.10.2015
(51) Int. Cl.: E05F 15/632

(54) **TÜRANTRIEB**
DOOR DRIVE
ENTRAINEMENT DE PORTE

(30) Priorität: 31.10.2014 DE 102014115932
(43) Veröffentlichungstag der Anmeldung: 04.05.2016
(73) Patentinhaber: dormakaba Deutschland GmbH, 58256 Ennepetal (DE)
(72) Erfinder: WAGNER, Martin, 58256 Ennepetal (DE); BUSCH, Sven, 58256 Ennepetal (DE)
(74) Vertreter: Balder IP Law, S.L.

(56) Entgegenhaltungen:
- EP-A2- 1 801 339
- EP-A2- 2 754 827
- WO-A1-2004/035977
- DE-A1- 19 628 289
- DE-A1-102005 001 314

## Beschreibung

Die Erfindung betrifft einen Türantrieb mit einer Antriebseinheit, wobei die Antriebseinheit umfasst: zumindest einen elektrischen Antrieb, einen Abtrieb, der von dem elektrischen Antrieb antreibbar ist und der mit einer Übertragungsvorrichtung zur Bewegung von Türflügeln verbindbar ist, eine Steuerungsvorrichtung, und ein Trägerelement, wobei das Trägerelement eine Vielzahl von Ausnehmungen aufweist, in denen der elektrische Antrieb, der Abtrieb und die Steuerungsvorrichtung angeordnet sind. Ein derartiger Türantrieb ist insbesondere für Schiebetüren verwendbar.

Aus dem Stand der Technik sind Antriebseinheiten für Türantriebe bekannt. Diese werden aus einzelnen Komponenten zusammengesetzt, wobei die einzelnen Komponenten auf ein gemeinsames Trägerprofil angeschraubt werden. Bei den Komponenten handelt es sich beispielsweise um Antriebsmotor, Getriebe, Netzteil oder Steuerung. Alle diese Komponenten werden nebeneinander auf dem Trägerprofil angebracht und miteinander verkabelt.
Es ist bei einer derartigen Antriebseinheit nachteilig, dass durch die Anordnung der Komponenten nebeneinander viel Bauraum zwischen den Komponenten ungenutzt bleibt. Es ist außerdem nachteilig, dass die einzelnen Komponenten nicht flexibel anordenbar sind.

Die DE 196 28 289 A1 offenbart ein Antrieb für ein Tor, mit Stromzuführung, mindestens einer Stromspeichereinheit, einem Antriebsmotor, einem Getriebe und mit einem Torbewegungstrieb auf Basis von direkt oder über mindestens ein Bewegungs-Übertragungselement mit dem Tor, dessen Blätter, Segmente oder Flügel verbundenen flexiblen Elementen, insbesondere einem Gurt- bzw. Zahnriementrieb kooperierendem Triebrad bzw. Antriebsritzel sowie Betätigungs- bzw. Auslöse-, Steuer- und/oder Kontrolleinrichtungen bzw. - Elektronik für die Torbewegung. Die Tor-Schließ- und - Öffnungseinrichtung ist als kompakte Baueinheit ausgebildet ist, wobei zumindest der Antriebsmotor, die Stromzuführungs- bzw. -anschluß-, - umform- und/oder Stromverteilungs-Elemente, der Stromspeicher und Steuer- und/oder Kontrolleinrichtung platz- bzw. baubreitesparend sequentiell innerhalb eines einzigen, einheitlichen bzw. langgestreckten, länglichen, bevorzugt, schmallänglich kastenförmigen, Tortrieb-Gehäuses angeordnet sind.

Die Antriebseinheit der DE 196 28 289 A1 weist ein entlang einer Mauerkante der Torausnehmung anordenbares bzw. angeordnetes, einen Rückteil und einen geteilten, mittels Schrauben darauf lösbar befestigten Deckteil mit zwei Teildeckteilen und aufweisendes, schmalkastenförmiges Tortrieb-Gehäuse, z. B. aus Stahlblech, anderen Blechen, Kunststoff oder einem gleichwertigen Material auf, welches mittels einer Konsole des Verbindungselementes an der Tor-Laufschiene des Tores ösbar befestigt ist. Nachteilhaft ist die aufwendige Montierbarkeit und die versteifte Aufnahme der Wellen im aus Blechelementen gefertigten Gehäuse.

Es ist daher Aufgabe der Erfindung, einen Türantrieb bereitzustellen, der bei einfacher und kostengünstiger Herstellung und Montage einen sicheren und zuverlässigen Betrieb aufweist, wobei ein flexibler Aufbau gegeben ist.

### Gehäuse als Träger

Die Aufgabe wird gelöst durch die Merkmale des Anspruchs 1. Somit wird die Aufgabe gelöst durch einen Türantrieb mit einer Antriebseinheit, wobei die Antriebseinheit zumindest einen elektrischen Antrieb, einen Abtrieb, eine Steuervorrichtung und ein Trägerelement umfasst. Der Abtrieb ist von dem elektrischen Antrieb antreibbar und ist mit einer Übertragungsvorrichtung zur Bewegung von Türflügeln verbindbar. Bei der Übertragungsvorrichtung kann es sich insbesondere um einen Riementrieb handeln. Das Trägerelement weist eine Vielzahl von Ausnehmungen auf. In den Ausnehmungen sind der elektrische Antrieb, der Abtrieb und die Steuervorrichtung angeordnet. Unter Ausnehmung ist hier insbesondere zu Verstehen, dass das Trägerelement Aushöhlungen und/oder Löcher aufweist, die zur Aufnahme der zuvor genannten Komponenten ausgebildet sind. Die Erfindung sieht vor, dass der elektrische Antrieb eine erste feststehende Achse und der Abtrieb eine zweite feststehende Achse aufweisen, wobei die erste feststehende Achse zur Lagerung des elektrischen Antriebs dient und die zweite feststehende Achse zur Lagerung des Abtriebes auf dem Trägerelement dient, wodurch ein einfach zu montierender wellenloser Antrieb und Abtrieb realisiert sind. Die feststehenden Achsen erlauben einen einfachen, kostengünstigen und kompakten Aufbau der Antriebseinheit. Somit ist ein platzsparender Aufbau, insbesondere mit den weiter unten genannten Abmessungen, möglich.

Die Unteransprüche haben vorteilhafte Weiterbildungen der Erfindung zum Inhalt.

Bevorzugt umfasst die Antriebseinheit ein Netzteil. Das Netzteil ist ebenfalls in einer Ausnehmung des Trägerelements angeordnet. Alternativ kann das Netzteil auch an einer Außenseite des Trägerelements angebracht sein. Somit ist das Netzteil alternativ in das Trägerelement einsteckbar oder auf das Trägerelement aufsteckbar.

Die Antriebseinheit umfasst vorteilhafterweise außerdem eine Verriegelungseinheit. Die Verriegelungseinheit ist wiederum in einer Ausnehmung des Trägerelements oder alternativ an einer Außenseite des Trägerelements angeordnet. Wie auch das Netzteil ist die Verriegelungseinheit somit alternativ in das Trägerelement einsteckbar oder auf das Trägerelement aufsteckbar.

Bevorzugt ist die Antriebseinheit ein quaderförmiger Körper. Dabei beträgt eine eine Höhe der Antriebseinheit maximal 120 Millimeter, wenn ein Gesamtgewicht der zu bewegenden Türflügel mindestens 600 Kilogramm beträgt. Sollte das Gesamtgewicht der zu bewegenden Türflügel zumindest 400 Kilogramm betragen, so weist die Antriebseinheit eine Höhe von maximal 90 Millimetern auf. Bei einem Gesamtgewicht der zu bewegenden Türflügel von zumindest 240 Kilogramm beträgt die Höhe der Antriebseinheit maximal 60 Millimeter. Die Höhe ist insbesondere eine Abmessung, die bei montierter Antriebseinheit vertikal oder senkrecht zu der Bewegungsrichtung der Türflügel messbar ist. Eine Tiefe der Antriebseinheit beträgt bevorzugt maximal 60 Millimeter. Die Tiefe ist insbesondere eine Abmessung, um die sich die montierte Antriebseinheit von einer Montagefläche, bevorzugt von einer Wand, abhebt.

In einer besonders vorteilhaften Ausgestaltung sind die erste feststehende Achse und die zweite feststehende Achse an dem Trägerelement befestigt. Die erste feststehende Achse und die zweite feststehende Achse sind insbesondere in das Trägerelement eingepresst und/oder mit dem Trägerelement verschraubt und/oder mit dem Trägerelement verklebt. Somit sind die erste feststehende Achse und die zweite feststehende Achse stabil an das Trägerelement angebunden. Gleichzeitig ist ein Montageaufwand der ersten feststehenden Achse und der zweiten feststehenden Achse sehr gering.
Ebenso ist besonders bevorzugt vorgesehen, dass die erste feststehende Achse parallel zu der zweiten feststehenden Achse angeordnet ist. Somit ist ein Achsabstand zwischen der ersten feststehenden Achse und der zweiten feststehenden Achse bestimbar. Der Achsabstand beträgt bevorzugt zumindest der Hälfte der Summe aus Durchmesser des elektrischen Antriebs und Durchmesser des Abtriebs entspricht. Somit ist eine kompakte Bauweise und ein einfacher Aufbau der Antriebseinheit realisiert.

Die erste feststehende Achse und die zweite feststehende Achse sind außerdem besonders vorteilhaft rechtwinklig oder im Wesentlichen rechtwinklig zu einer Bewegungsrichtung der Türflügel ausgerichtet. In diesem Zusammenhang ist unter im Wesentlichen Rechtwinklig eine Abweichung von bis zu zehn Prozent von einem Winkel von 90 Grad zu verstehen.

### Anordnung der Steuerungsvorrichtung

Der elektrische Antrieb weist eine Längsachse auf und ist vorteilhafterweise zylinderförmig aufgebaut. Der Abtrieb ist wiederrum von dem elektrischen Antrieb antreibbar und ist mit der Übertragungsvorrichtung zur Bewegung der Türflügel verbindbar. Wiederum ist die Übertragungsvorrichtung vorteilhafterweise ein Riementrieb. Die Steuerungsvorrichtung umfasst mindestens eine erste Leiterkarte und mindestens eine zweite Leiterkarte. Dabei ist zumindest die erste Leiterkarte senkrecht zu der Längsachse des elektrischen Antriebs und zumindest teilweise mit dem elektrischen Anrieb überlappend angeordnet. Auf diese Weise ist eine vorteilhafte Trennung der Aufgaben der ersten Leiterkarte und der zweiten Leiterkarte ermöglicht. So ist insbesondere vorgesehen, dass die erste Leiterkarte Aufgaben übernimmt, die unmittelbar den elektrischen Antrieb betreffen.
Die Unteransprüche haben vorteilhafte Weiterbildungen der Erfindung zum Inhalt.
Vorteilhafterweise umfasst die erste Leiterkarte eine Steuerung des elektrischen Antriebs und die zweite Leiterkarte eine Logiksteuerung. Für die Steuerung des elektrischen Antriebs sind üblicherweise hohe Ströme und hohe Spannungen notwendig, während die Logiksteuerung geringe Ströme und geringe Spannungen benötigt werden. Somit ist durch die beschriebene Aufgabenteilung der ersten Leiterkarte und der zweiten Leiterkarte eine vorteilhafte Trennung von Bereichen mit hoher elektrischer Leistung und von Bereichen mit geringer elektrischer Leistung ermöglicht. Lediglich die erste Leiterkarte muss für hohe elektrische Leistungen ausgelegt sein.

Ein Abstand zwischen der ersten Leiterkarte und einem Rotor des elektrischen Antriebs beträgt bevorzugt maximal 20 Millimeter. Insbesondere beträgt der Abstand maximal 15 Millimeter. Besonders bevorzugt beträgt der Abstand maximal 10 Millimeter. Somit ist es vorteilhafterweise ermöglicht, Sensoren für den elektrischen Antrieb direkt auf der ersten Leiterkarte anzuordnen. Dies erlaubt ein platzsparendes Design des elektrischen Antriebs, da dieser keine eigenen Sensoren benötigt. Alle Sensoren für den elektrischen Antrieb können somit platzsparend auf der ersten Leiterkarte angeordnet werden. Derartige Sensoren sind insbesondere Hallsensoren zur Detektion einer aktuellen Ausrichtung des Rotors.

Bevorzugt ist die erste Leiterkarte über ein Kontaktelement mit der zweiten Leiterkarte verbunden. Das Kontaktelement ist insbesondere ein Steckelement. Somit sind die erste Leiterkarte und die zweite Leiterkarte unabhängig voneinander bereitstellbar und in der Antriebseinheit montierbar, wobei eine Verbindung der ersten Leiterkarte und der zweiten Leiterkarte durch das Kontaktelement sichergestellt ist.

Schließlicht umfasst die Antriebseinheit bevorzugt ein Netzteil. Die erste Leiterkarte ist somit vorteilhafterweise zwischen der zweiten Leiterkarte und dem Netzteil angeordnet. Dies ermöglicht insbesondere kurze Übertragungswege für elektrische Leistungen, so dass keine langen Leitungen zum Übertragen hoher elektrischer Ströme oder Spannungen auf der ersten Leiterkarte und/oder auf der zweiten Leiterkarte angebracht sein müssen.

### Anordnung der Antriebseinheit am Profil

Der Türantrieb kann ein Antriebsprofil umfassen, wobei die Antriebseinheit an dem Antriebsprofil angebracht ist. Der elektrische Antrieb weist eine Längsachse auf und ist insbesondere zylinderförmig aufgebaut. Innerhalb des Antriebsprofils ist die Übertragungsvorrichtung angeordnet, die von dem Abtrieb antreibbar ist. Bei der Übertragungsvorrichtung handelt es sich insbesondere um einen Riemen. Außerdem sind an dem Antriebsprofil die Türflügel lagerbar und von der Übertragungsvorrichtung bewegbar. Eine Gesamttiefe des Türantriebs beträgt maximal 160 Millimeter, bevorzugt maximal 70 Millimeter. Der Türantrieb mit der Gesamttiefe von maximal 160 Millimetern ist insbesondere ein Standardantrieb. Der Türantrieb mit der Gesamttiefe von maximal 70 Millimetern ist insbesondere ein Krankenhausantrieb. Die Gesamttiefe ist insbesondere parallel zu der Längsachse und/oder senkrecht zu den Türflügeln messbar. Somit ermöglicht der erfindungsgemäße Türantrieb eine sehr flache Bauweise. Dies erlaubt eine Vielzahl von unterschiedlichen Gestaltungsmöglichkeiten, so dass der Türantrieb sehr flexibel einsetzbar ist.

Die Unteransprüche haben vorteilhafte Weiterbildungen der Erfindung zum Inhalt.
Bevorzugt ist eine erste Antriebseinheit an einem ersten Ende des Antriebsprofils und/oder eine zweite Antriebseinheit an einem zweiten Ende des Antriebsprofils angebracht. Dabei ist die erste Antriebseinheit insbesondere identisch zu der zweiten Antriebseinheit aufgebaut. Somit ist eine flexible Anordnung des Türantriebs möglich. Insbesondere sind zwei Antriebseinheit parallel betreibbar, wodurch eine Belastung jeder der Antriebseinheiten sinkt. Außerdem ist auf diese Weise ein redundantes System vorhanden, da eine Antriebseinheit bei Ausfall der anderen Antriebseinheit die Türflügel weiterhin bewegen kann.

Vorteilhafterweise ist zwischen Antriebseinheit und Antriebsprofil ein wärmeleitendes Material eingebracht. Somit dient das Antriebsprofil als Wärmeleitkörper und daher als Kühlkörper für die Antriebseinheit. Aufgrund der Größe des Antriebsprofils ist somit eine optimale Kühlung der Antriebseinheit sichergestellt. Dies bedeutet insbesondere, dass eine Überhitzung des elektrischen Antriebs der Antriebseinheit auch bei schweren Türflügeln vermieden oder zumindest verzögert wird.

Die Antriebseinheit ist bevorzugt an einer Stirnseite oder an einer Längsseite des Antriebsprofils angebracht. Das Anbringen an einer Stirnseite erlaubt einen flachen Aufbau des Türantriebs. Das Anbringen wiederum an der Längsseite erlaubt einen schmalen Aufbau des Türantriebs. Somit ist die Antriebseinheit bevorzugt für beide Möglichkeiten geeignet, wobei ein Monteur keinerlei Randbedingungen oder Beschränkungen durch die Antriebseinheit berücksichtigen muss. Außerdem ist für beide Möglichkeiten bevorzugt die Steuerungsvorrichtung zu dem Monteur hin orientiert.

Um den Eindruck eines filigranen Türbetätigers zu erhalten, sollen sich die Antriebseinheit und/oder das Antriebsprofil möglichst wenig von einer Montagefläche, insbesondere von einer Wand, abheben. Daher ist bevorzugt vorgesehen, dass ein Abstand zwischen einer parallel zu der Übertragungsvorrichtung verlaufenden Rückseite der Antriebseinheit und der Übertragungsvorrichtung maximal 30 Millimeter, insbesondere maximal 20 Millimeter beträgt. Derartige Werte sind insbesondere durch den oben genannten Aufbau der Antriebseinheit erreichbar.

In einer vorteilhaften Ausführungsform ist die Antriebseinheit derart an dem Antriebsprofil befestigt, dass die Steuerungsvorrichtung von dem Antriebsprofil weg weist. Somit können auf der Steuerungsvorrichtung Bedienelemente angebracht werden, die zum Einstellen und/oder Kalibrieren und/oder Bedienen des Türantriebs dienen. Das unmittelbare Anbringen der Bedienelemente auf der Steuerungsvorrichtung erlaubt einen platzsparenden und kostengünstigen Aufbau, da keine zusätzlichen Kabel verlegt werden müssen.

Die Erfindung wird nun anhand eines Ausführungsbeispiels näher beschrieben. Dabei zeigen:

### Gehäuse als Träger

- Fig. 1: eine schematische Darstellung einen Türantriebs gemäß einem ersten Ausführungsbeispiel der Erfindung,
- Fig. 2: eine erste schematische Darstellung einer Antriebseinheit des Türantriebs gemäß dem ersten Ausführungsbeispiel der Erfindung,
- Fig. 3: eine zweite schematische Darstellung der Antriebseinheit des Türantriebs gemäß dem ersten Ausführungsbeispiel der Erfindung,
- Fig. 4: eine dritte schematische Darstellung der Antriebseinheit des Türantriebs gemäß dem ersten Ausführungsbeispiel der Erfindung,
- Fig. 5: eine vierte schematische Darstellung der Antriebseinheit des Türantriebs gemäß dem ersten Ausführungsbeispiel der Erfindung,

### Anordnung der Steuerungsvorrichtung

- Fig. 6: eine schematische Darstellung einer Antriebseinheit des Türantriebs gemäß einem zweiten Ausführungsbeispiel der Erfindung,
- Fig. 7: eine schematische Darstellung einer Antriebseinheit des Türantriebs gemäß einem dritten Ausführungsbeispiel der Erfindung,
- Fig. 8: eine weitere schematische Darstellung der Antriebseinheit des Türantriebs gemäß dem dritten Ausführungsbeispiel der Erfindung,
- Fig. 9: eine weitere schematische Darstellung der Antriebseinheit des Türantriebs gemäß dem zweiten Ausführungsbeispiel der Erfindung,
- Fig. 10: eine weitere schematische Darstellung der Antriebseinheit des Türantriebs gemäß dem zweiten Ausführungsbeispiel der Erfindung,

### Anordnung der Antriebseinheit am Profil

- Fig. 11: eine schematische Detailansicht des Türantriebs gemäß dem ersten Ausführungsbeispiel,
- Fig. 12: eine alternative Ansicht des Türantriebs aus Figur 11,
- Fig. 13: eine schematische Detailansicht des Türantriebs gemäß einem vierten Ausführungsbeispiel der Erfindung,
- Fig. 14: eine alternative Ansicht des Türantriebs von Figur 13,
- Fig. 15: eine weitere schematische Darstellung des Türantriebs gemäß dem ersten Ausführungsbeispiel der Erfindung,
- Fig. 16: eine schematische Darstellung eines Türantriebs gemäß einem fünften Ausführungsbeispiel der Erfindung,
- Fig. 17: eine schematische Darstellung eines Türantriebs gemäß einem sechsten Ausführungsbeispiel der Erfindung, und
- Fig. 18: eine weitere schematische Darstellung eines Türantriebs gemäß dem ersten Ausführungsbeispiel der Erfindung,

### Überblick über den Türantrieb

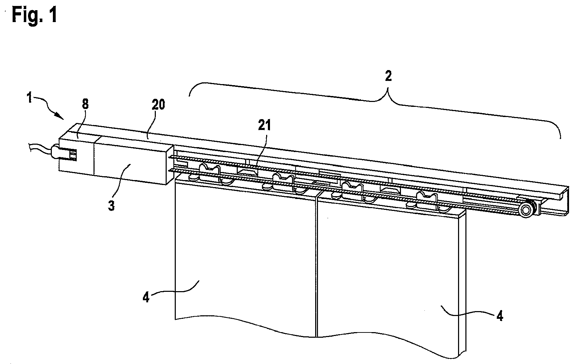

Figur 1 zeigt eine schematische Darstellung eines Türantriebs 1 gemäß einem ersten Ausführungsbeispiel der Erfindung. Der Türantrieb 1 umfasst eine Antriebseinheit 3, mit der elektrische Energie in mechanische Energie umwandelbar ist. Zur Übertragung der mechanischen Energie weist der Türantrieb 1 eine Übertragungsvorrichtung 2 auf, die mit der Antriebseinheit 3 wirkverbunden ist. In dem gezeigten Ausführungsbeispiel umfasst die Übertragungsvorrichtung 2 einen Riemen 21, wobei andere Ausgestaltungen ebenso möglich sind.

Der Riemen 21 der Übertragungsvorrichtung 2 erlaubt ein Bewegen von Türflügel 4. Insbesondere werden die Türflügel 4 linear voneinander weg und linear aufeinander zu bewegt, um ein Öffnen und Schließen einer von den Türflügeln 4 gebildeten Tür zu realisieren. Zum Bewegen der Türflügel ist Vorgesehen, dass die Antriebseinheit 3 elektrische Energie von einem Netzteil 8 bezieht und die elektrische Energie in mechanische Energie wandelt. Die mechanische Energie wird von der Antriebseinheit 3 auf die Übertragungsvorrichtung 2 übertragen, die wiederum die mechanische Energie in Bewegungsenergie der Türflügel 4 umwandelt. Mit der Bewegungsenergie der Türflügel 4 ist die Türe öffenbar und schließbar.

In dem in Figur 1 gezeigten Ausführungsbeispiel dient der Türantrieb 1 zum Öffnen und Schließen einer Schiebetür. Dabei ist erfindungsgemäß ebenso vorgesehen, dass der Türantrieb 1 zum Öffnen und Schließen anderer Türarten verwendbar ist, auch wenn dies nicht explizit beschrieben ist.

Im Folgenden werden verschiedene Ausführungsbeispiele des erfindungsgemäßen Türantriebs 1, insbesondere der Antriebseinheit 3, beschrieben. Die einzelnen Ausführungsbeispiele sind miteinander kombinierbar, sodass die unterschiedlichen Ausgestaltungen der Antriebseinheit 3 auch in dem in Figur 1 gezeigten Türantrieb 1 verwendbar ist. Insbesondere sind auch die Ausführungsbeispiele auch untereinander kombinierbar, insofern sie unter den Schutzumfang der Erfindung fallen, der nur durch die Ansprüche definiert ist.

### Überblick über die Antriebseinheit

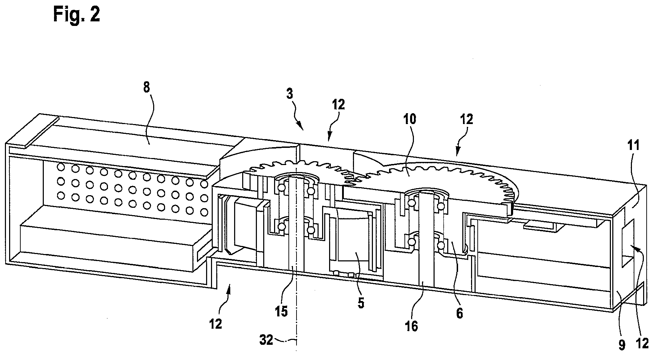

Figur 2 zeigt eine schematische Darstellung der Antriebseinheit 3 des Türantriebs 1 gemäß dem ersten Ausführungsbeispiel der Erfindung. Die Antriebseinheit 3 umfasst einen elektrischen Antrieb 5, der elektrische Energie in mechanische Energie umwandelt. Der elektrische Antrieb 5 ist bevorzugt ein Elektromotor, insbesondere ein bürstenloser Elektromotor. Bevorzugt ist der Elektromotor ein bürstenloser permanenterregter elektronisch kommutierter Motor. Der elektrische Antrieb weist eine Längsachse 32 auf.

Zum Bereitstellen von Gleichspannung ist die Antriebseinheit 3 mit einem Netzteil 8 verbunden. Das Netzteil 8 ist in Figur 2 lediglich schematisch dargestellt.

Der elektrische Antrieb 5 ist über ein Getriebe 10 mit einem Abtrieb verbunden. Der Abtrieb 6 ist insbesondere eine Umlenkrolle, die mit dem Riementrieb 21 verbindbar ist. Somit ist Energie von dem elektrischen Antrieb 5 über das Getriebe 10 auf die Umlenkrolle des Abtriebs 6 übertragbar. Mit der Umlenkrolle ist die Energie wiederum auf den Riemen 21 übertragbar, so dass mit der Antriebseinheit 3 die zum Bewegen der Türflügel 4 notwendige Energie bereitstellbar ist.

Weiterhin weist die Antriebseinheit 3 eine Verriegelungseinheit 9 auf. Die Verriegelungseinheit 9 dient zum Verhindern einer Bewegung der Türflügel 4, so dass die Türflügel 4 nicht unberechtigt öffenbar und/oder schließbar sind.

### Gehäuse als Träger

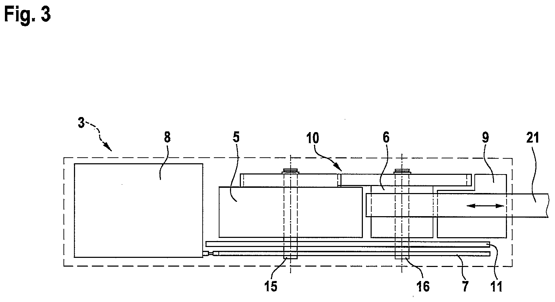

Die Figur 3 zeigt eine weitere schematische Ansicht der Antriebseinheit 3. Dabei ist erkennbar, dass sämtliche Komponenten der Antriebseinheit 3 an einem Trägerelement 11 angeordnet sind. Das Trägerelement 11 ist bevorzugt ein Gehäuse, dass eine Vielzahl von Ausnehmungen aufweist. Unter Ausnehmungen ist hier insbesondere eine Aushöhlung oder ein Durchgangsloch zu verstehen.

An dem Trägerelement 11 ist eine erste feststehende Achse 15 sowie eine zweite feststehende Achse 16 befestigt. Insbesondere sind die erste feststehende Achse 15 sowie die zweite feststehende Achse 16 in das Trägerelement 11 eingepresst. Alternativ oder zusätzlich ist eine Verschraubung und/oder eine Verklebung möglich. Die erste feststehende Achse 15 dient zur Lagerung des elektrischen Antriebs 5, während die zweite feststehende Achse zur Lagerung des Abtriebs 6 dient. Somit ist ein einfach zu montierender wellenloser Motor realisiert.

Idealerweise sind die erste feststehende Achse 15 und die zweite feststehende Achse 16 parallel zueinander angeordnet. Außerdem sind die erste feststehende Achse 15 und die zweite feststehende Achse 16 bevorzugt senkrecht zu einer Verfahrensrichtung der Türflügel 4 angeordnet. Dies ermöglicht es, den Durchmesser d des elektrischen Antriebs 5 zu maximieren, wodurch ein sehr hohes Drehmoment erzeugbar ist. Das Getriebe 10 weist daher eine geringes Übersetzungsverhältnis auf. Außerdem ist es ermöglicht, eine Höhe des elektrischen Antriebs 5 und damit eine Höhe h der Antriebseinheit 3 zu minimieren.

Um eine Antriebseinheit 3 mit geringen Abmessungen zu realisieren, sind die Komponenten der Antriebseinheit 3 eng angeordnet und teilweise ineinander verschachtelt. So sind insbesondere der elektrische Antrieb 5 und der Abtrieb 6 unmittelbar nebeneinander angebracht, wobei das verbindende Getriebe 10 über dem Bauraum des elektrischen Antriebs 5 und des Abtriebs 6 angeordnet ist. Die Verriegelungseinheit 9 wiederum ist eng an dem Abtrieb 6 und unterhalb des Bauraums des Getriebes 10 angeordnet. Somit ist ein kompakter Aufbau der Antriebseinheit 3 vorhanden.

Das Trägerelement 11 ist somit bevorzugt sowohl eine Befestigung als auch ein Gehäuse für den elektrischen Antrieb 5, den Abtrieb 6, das Getriebe 10, die Steuerungsvorrichtung 7, die Verriegelungseinheit 9 und das Netzteil 8. Somit weist die Antriebseinheit 3 neben einem geringen Bauraumbedarf weiterhin den Vorteil auf, dass eigene Gehäuse der genannten Komponenten der Antriebseinheit 3 nicht benötigt werden. Außerdem erlaubt die integrative Bauweise einen Verzicht von Verkabelungen oder zumindest eine weitgehende Minimierung des Verkabelungsbedarfs.

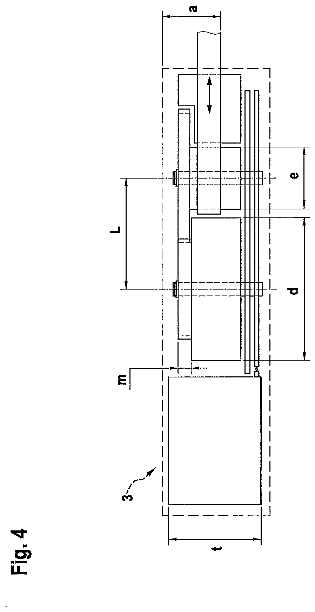

Figur 4 zeigt eine weitere schematische Darstellung der Antriebseinheit 3, wobei der Aufbau der in Figur 4 gezeigten Antriebseinheit 3 identisch zu dem Aufbau der Antriebseinheit 3 aus Figur 3 ist.

Aus Figur 4 ist erkennbar, dass die zuvor beschriebene erste feststehende Achse 15 einen Achsabstand L zu der zweiten feststehenden Achse 16 aufweist. Der Achsabstand berechnet sich insbesondere aus der halben Summe des Durchmessers d des elektrischen Antriebs 5 und des Durchmessers e des Abtriebs 6.

Dieser Aufbau ermöglicht die einfache und damit kostengünstige Herstellung eines wellenlosen Motors mit hohem Drehmoment. Das Drehmoment des elektrischen Antriebs 5 beträgt bevorzugt zumindest 2 Nm, insbesondere zumindest 4 Nm. Damit wird eine geringe Übersetzung des Getriebes 10 benötigt, bevorzugt beträgt die Übersetzung 1,1 bis 4. Das Getriebe 10 ist insbesondere eine Stirnradgetriebestufe oder Riemenradgetriebestufe, die jeweils sehr effizient sind.

Aufgrund einer derart niedrigen Übersetzung des Getriebes 10 ist kaum Selbsthemmung der Antriebseinheit 3 vorhanden. Somit können die Türflügel 4 bei Bedarf auch von Hand verschoben werden. Die geringe Selbsthemmung verringert außerdem die Gefahr einer Blockerung.

Schließlich benötigt der elektrische Antrieb 5 aufgrund des hohen Drehmoments zum Betrieb lediglich geringe Drehzahlen. Bevorzugt beträgt eine maximale Betriebsdrehzahl des elektrischen Antriebs maximal 1500 min⁻¹, bevorzugt maximal 1200 min⁻¹, insbesondere maximal 1000 min⁻¹. Somit ist der elektrische Antrieb 5 sehr leise.

Für einen kompakten Aufbau ist außerdem vorgesehen, dass der Durchmesser d des elektrischen Antriebs 5 85 Millimeter beträgt, während der Durchmesser e des Abtriebs 6 37 Millimeter beträgt. Somit beläuft sich der Achsabstand L zwischen erster feststehender Achse 15 und zweiter feststehender Achse 16 zu 67 Millimeter.
Eine Stirnradhöhe m des Getriebes 10 beträgt insbesondere 8 Millimeter. Sollte das Getriebe 10 eine Riemenstufe sein, so beträgt die Riemenhöhe insbesondere 14 Millimeter. Somit ist eine sehr kleine Antriebseinheit 3 herstellbar, wobei eine Tiefe t der Antriebseinheit 3 maximal 60 Millimeter beträgt. Durch einen Abstand a zwischen Riemen 21 und Rückseite der Antriebseinheit 3, d.h. einer Seite der Antriebseinheit 3, die zu einer Montagefläche weist, an der die Antriebseinheit 3 montiert oder montierbar ist, von maximal 30 Millimetern, besonders bevorzugt von maximal 20 Millimetern ist eine sehr flache Bauweise ermöglicht. Eine flache Bauweise bedeutet insbesondere, dass sich die Antriebseinheit 3 nur wenig von einer Montagefläche, beispielsweise von einer Wand, abhebt.

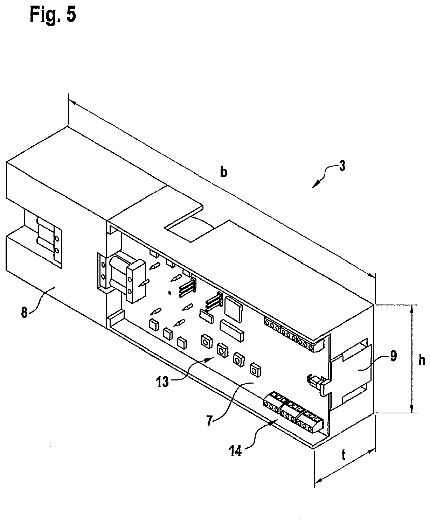

Die integrative Bauweise der Antriebseinheit 3 ist außerdem in Figur 5 gezeigt. So ist ersichtlich, dass das Trägerelement 11 neben der Tragfunktion auch ein Gehäuse für die Komponenten der Antriebseinheit 3 darstellt. Lediglich das Netzteil 8 ist als separates Bauteil mit eigenem Gehäuse an dem Träger 11 befestigt.

Eine Breite b der Antriebseinheit 3 beträgt maximal 400 Millimeter, bevorzugt maximal 350 Millimeter, besonders bevorzugt maximal 300 Millimeter, während eine Höhe h der Antriebseinheit 3 maximal 90 Millimeter beträgt. Die Tiefe t der Antriebseinheit 3 wurde zuvor bereits mit maximal 60 Millimetern beschrieben. Somit ist ersichtlich, dass die Antriebseinheit 3 sehr kompakt und platzsparend aufgebaut ist, dennoch aber ausreichend Leistung zum Bewegen der Türflügel 4 aufweist.

### Anordnung der Steuerungsvorrichtung

Im Folgenden werden ein zweites, ein drittes, ein viertes und ein fünftes Ausführungsbeispiel der Erfindung beschrieben. In den Figuren hierzug zeigen gleiche Bezugszeichen an, dass es sich um gleiche oder gleichartige Bauelemente wie im ersten Ausführungsbeispiel handelt.

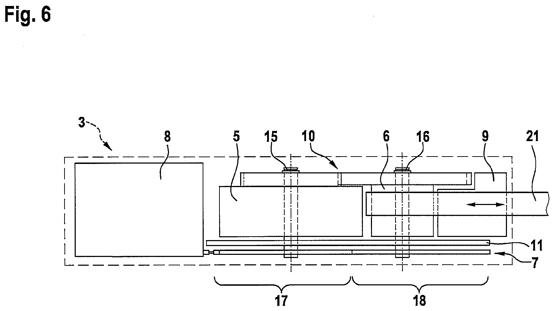

Figur 6 zeigt ein eine schematische Darstellung der Antriebseinheit 3 des Türantriebs 1 gemäß einem zweiten Ausführungsbeispiel der Erfindung. Der Aufbau der Antriebseinheit 3 des Türantriebs 1 gemäß dem zweiten Ausführungsbeispiel ist dabei grundsätzlich identisch zu dem Aufbau der Antriebseinheit 3 des Türantriebs 1 gemäß dem ersten Ausführungsbeispiel.

Der einzige Unterschied zu dem ersten Ausführungsbeispiel ist der Aufbau der Steuerungsvorrichtung 7. Diese weist eine erste Leiterkarte 17 und eine zweite Leiterkarte 18 auf. Die erste Leiterkarte 17 ist insbesondere eine Motorsteuerung, während die zweite Leiterkarte 18 bevorzugt eine Logiksteuerung ist.

Die Steuerungsvorrichtung 7 ist ganz oder zumindest teilweise unter dem elektrischen Antrieb 5 angeordnet. Damit ist eine gute Zugänglichkeit für einen Monteur gegeben, da Bedienelemente 13 der Steuerungsvorrichtung von außen zugänglich sind. Die Steuerungsvorrichtung 7 bildet damit eine Frontseite der montierten Antriebseinheit 3.

Ein Abstand zwischen der ersten Leiterkarte 17 und einem Rotor des elektrischen Antriebs 5 beträgt maximal 10 Millimeter. Die erste Leiterkarte weist außerdem Magnetsensoren auf, die ein Magnetfeld des Rotors abtasten können. Durch den zuvor beschriebenen geringen Abstand ist die Anordnung der Magnetsensoren unmittelbar auf der ersten Leiterkarte 17 möglich, ohne dass die Abtastung des Magnetfelds des Rotors beeinträchtigt ist.

Aufgrund der Anordnung der ersten Leiterkarte 17 wird insbesondere die Verwendung von Magnetsensoren in SMD-Bauform eingesetzt werden.

Somit entstehen einerseits Kostenvorteile, andererseits Vorteile bei der Fertigung der ersten Leiterkarte 17. Außerdem kann eine Wicklung des elektrischen Antriebs 5 direkt mit der Steuerungsvorrichtung 7, insbesondere direkt mit der ersten Leiterkarte 17 ausgeführt werden. Somit ist für die Anbindung des elektrischen Antriebs 5 keine zusätzliche Verkabelung notwendig. Alternativ können kurze Kabel zur Anbindung des elektrischen Antriebs 5 an die Steuerungsvorrichtung 7 verwendet werden.

Die zweite Leiterkarte 18 ist eine Logiksteuerung, welche bevorzugt die Bedienelemente 13 aufweist. Außerdem weist die zweite Leiterkarte 18 Elemente zur Logikauswertung auf. In dem in Figur 6 gezeigten Ausführungsbeispiel ist die erste Leiterkarte 17 einstückig mit der zweiten Leiterkarte 18 ausgebildet.

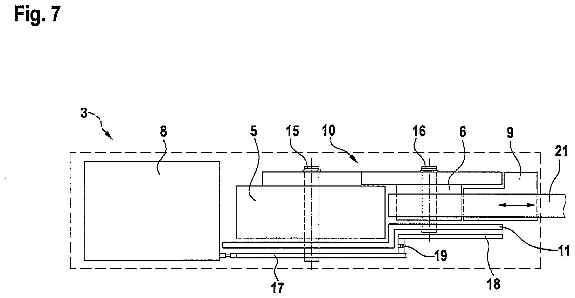

In dem in Figur 7 gezeigten dritten Ausführungsbeispiel sind die erste Leiterkarte 17 und die zweite Leiterkarte 18 separate Bauteile, die über ein Kontaktelement 19 verbunden sind. Das Kontaktelement 19 ist ein Steckelemente, das die erste Leiterkarte 17 elektrische mit der zweiten Leiterkarte 18 verbindet. Außerdem sind die erste Leiterkarte 17 und die zweite Leiterkarte 18 in unterschiedlichen Höhen oder Ebenen angeordnet, so dass ein großer Bauraum für die Bedienelemente 13 oder zusätzliche Anschlussstecker vorhanden ist. Dazu ist die zweite Leiterkarte 18 bevorzugt weiter in die Antriebseinheit 3 hineinversetzt als die erste Leiterkarte 17.

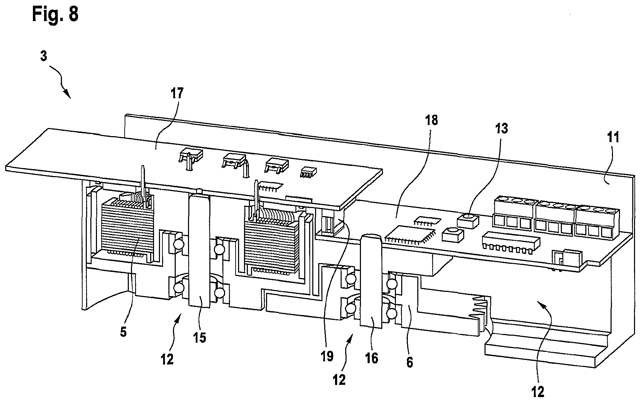

Figur 8 zeigt ebenfalls die Antriebseinheit 3 des Türantriebs 1 gemäß dem dritten Ausführungsbeispiel wird der erhöhte Bauraum für die Bedienelemente 13 deutlich dargestellt. Außerdem ist ersichtlich, dass auch für die erste Leiterkarte 17 und die zweite Leiterkarte 18 das Trägerelement 11 zumindest teilweise ein Gehäuse darstellt.

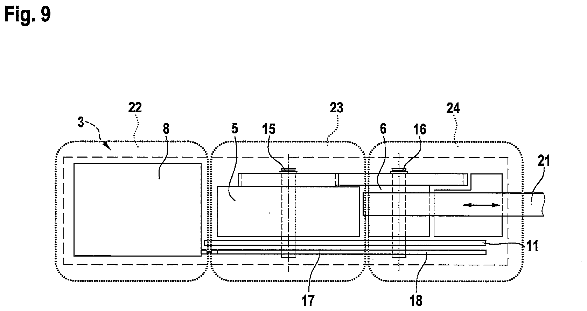

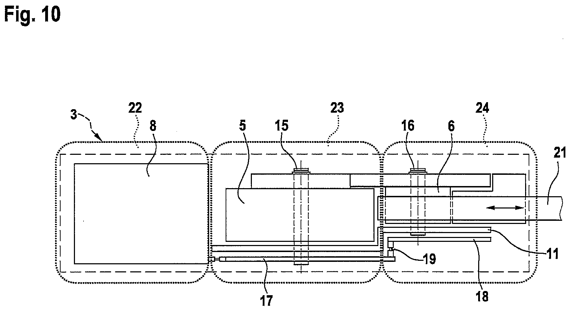

Figur 9 zeigt eine weitere Darstellung der Antriebseinheit 3 des Türantriebs 1 gemäß dem zweiten Ausführungsbeispiel. Schließlich zeigt Figur 10 eine zusätzliche Darstellung der Antriebseinheit 3 des Türantriebs 1 gemäß dem dritten Ausführungsbeispiel. Sowohl aus Figur 9 als auch aus Figur 10 ist erkennbar, dass sich die jeweils gezeigten Antriebseinheiten 3 in drei Bereiche untergliedern lassen:
In einem ersten Bereich 22 liegen hohe Spannungen an. So ist hier insbesondere das Netzteil 8 angeordnet. In dem ersten Bereich 22 herrscht bevorzugt die Netzspannung von 230 VAC, wobei lediglich geringe Ströme von weniger als zwei Ampere fließen. Damit ergibt sich eine maximale elektrische Leistung von in etwa 380 Watt. Das Netzteil 8 wandelt die Netzspannung in eine Betriebsspannung von 24 VDC um und leitet diese an einen zweiten Bereich 23 der Antriebseinheit 3 weiter.

In dem zweiten Bereich 23 liegt die geringe Betriebsspannung von 24 VDC an, wobei hohe Motorströme von mehr als zehn Ampere vorliegen. Die Motorströme werden insbesondere zur Versorgung des elektrischen Antriebs 5 benötigt. Außerdem befindet sich in dem zweiten Bereich 23 die erste Leiterkarte 17, welche die notwendigen elektrischen Komponenten zur Ansteuerung des elektrischen Antriebs 5 umfasst.

Aufgrund der hohen Motorströme beträgt die maximale elektrische Leistung innerhalb des zweiten Bereichs 23 in etwa 380 W. Die erste Leiterkarte 17 schaltet die Motorströme bevorzugt in Abhängigkeit von der Position des Rotors des elektrischen Antriebs 5, wodurch eine elektronische Kommutierung realisiert ist. Die elektronische Kommutierung wird von der zweiten Leiterkarte 18 mit der Logiksteuerung überwacht.

Die zweite Leiterkarte 18 ist in einem dritten Bereich 24 der Antriebseinheit 3 angeordnet. In dem dritten Bereich 24 liegt wiederum die Betriebsspannung von 24 VDC an, wobei lediglich kleine Schaltströme von weniger als einem Ampere fließen.

Somit befindet sich in dem dritten Bereich 24 die gesamte Logiksteuerung der Antriebseinheit 3. Diese umfasst insbesondere die Bedienelemente 13 und bevorzugt diverse Anschlusselemente für zusätzliche Sensoren oder Schalter. Die Logiksteuerung bestimmt aufgrund von Informationen und/oder Signalen, die auf den Türantrieb 1 von außen einwirken, den Fahrzyklus der Türflügel 4 und steuert die Motorsteuerung der ersten Leiterkarte 17 entsprechend an. Dabei werden nur geringe Spannungen und Ströme benötigt. Die von außen auf den Türantrieb 1 einwirkenden Informationen und/oder Signale sind insbesondere eine Geschwindigkeit und Position der Türflügel 4, ein Hindernis zwischen den Türflügeln 4, das Vorhandensein eines Brandfalls, oder die Signale von Türsensoren.

Durch die Unterteilung der Antriebseinheit 3 in den ersten Bereich 22, den zweiten Bereich 23 und den dritten Bereich 24 erfolgt eine Abstufung der Antriebseinheit 3 von großen zu kleinen elektrischen Leistungen. Außerdem ist eine Trennung zwischen dem Leistungsteil und dem Logikteil ermöglicht, wodurch Störungen aufgrund von elektromagnetischen Strahlungen reduziert oder verhindert sind.

### Anordnung der Antriebseinheit

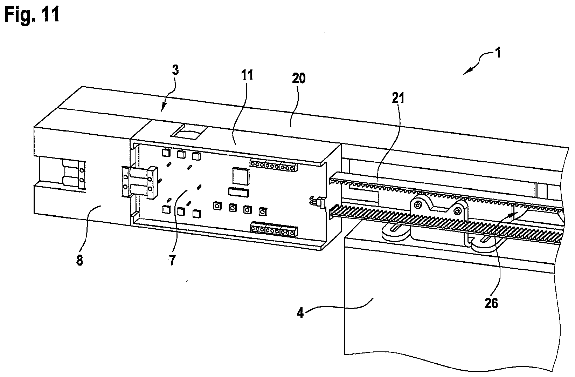

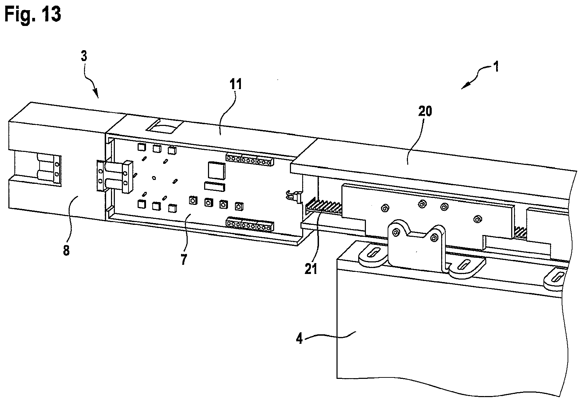

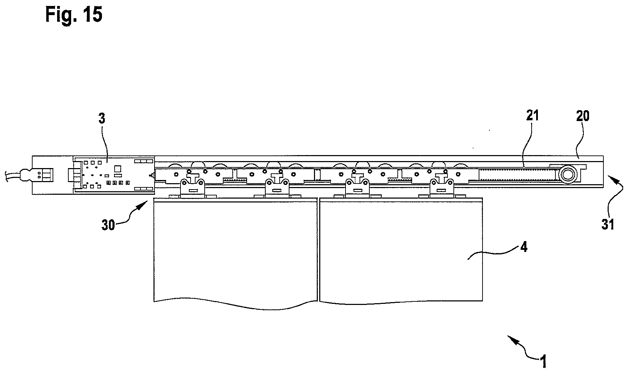

Figur 11 zeigt eine schematische Detailansicht des Türantriebs 1 gemäß dem ersten Ausführungsbeispiel. Hierbei ist ersichtlich, dass die Antriebseinheit 3 an einer Seitenfläche des Antriebsprofils 20 angeordnet ist. Alternativ hierzu ist die Antriebseinheit 3, wie in dem vierten Ausführungsbeispiel in Figur 13 gezeigt ist, an einer Stirnseite des Antriebsprofils 20 angeordnet. Somit ist die Antriebseinheit 3 sehr universell einsetzbar. Insbesondere ist mit der Antriebseinheit 3 eine Vielzahl von unterschiedlichen Türantrieben 1 herstellbar. Dies wird später mit Bezug auf die Figuren 15, 16 und 17 detailliert beschrieben.

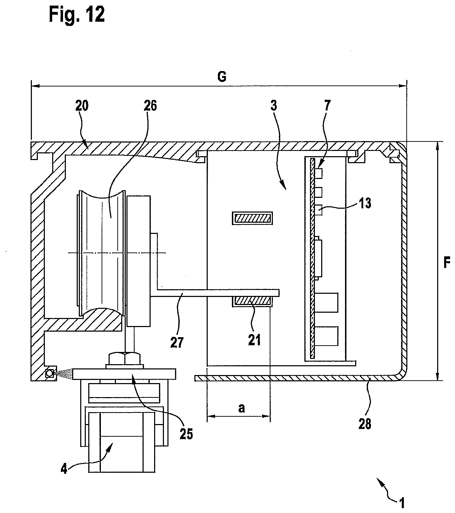

Figur 12 zeigt eine alternative Ansicht des Türantriebs 1 aus Figur 11. Der Türantrieb 1 weist das Antriebsprofil 21 auf, an dessen Seitenfläche die Antriebseinheit 3 angeordnet ist. Außerdem sind an dem Antriebsprofil 21 die Türflügel 4 gelagert, indem die Türflügel 4 über eine Türanbindung 25 mit zumindest einer Laufrolle 26 verbunden sind. Die Laufrolle 26 ist innerhalb des Antriebsprofils 21 geführt.

Somit weist diejenige Seite der Antriebseinheit 3, auf der die Steuerungsvorrichtung 7 angeordnet ist, von dem Antriebsprofil 21 weg, während die gegenüberliegende Seite der Antriebseinheit 3 zu den Laufrollen 26 der Türflügel 4 weist. Somit sind Bedienelemente 13 der Steuerungsvorrichtung 7 leicht zugänglich. Über eine Abdeckung 28 ist sowohl die Antriebseinheit 3 als auch das Antriebsprofil 21 abgedeckt.

Die Türanbindung 25 ist außerdem mit einem Mitnehmer 27 verbunden. Der Mitnehmer 27 greift in den Riemen 21 ein und ist daher von der Antriebseinheit 3 bewegbar. Auf diese Weise sind die Türflügel 4 von der Antriebseinheit 3 verschiebbar.

Der Türantrieb 1 gemäß dem ersten Ausführungsbeispiel weist eine Gesamttiefe G von 160 Millimetern und eine Gesamthöhe F von 100 Millimetern auf. Der Riemen 21 verläuft derart durch die Antriebseinheit 3, dass der Abstand a zwischen dem Riemen 21 und der den Laufrollen 26 zugewandten Rückseite der Antriebseinheit 3 27 Millimeter und damit weniger als 30 Millimeter beträgt. Alternativ kann der Türantrieb 1 auch derart ausgestaltet sein, dass eine Gesamthöhe F lediglich 70 Millimeter beträgt. In diesem Fall sind Türflügel 4 geringerer Masse bewegbbar.

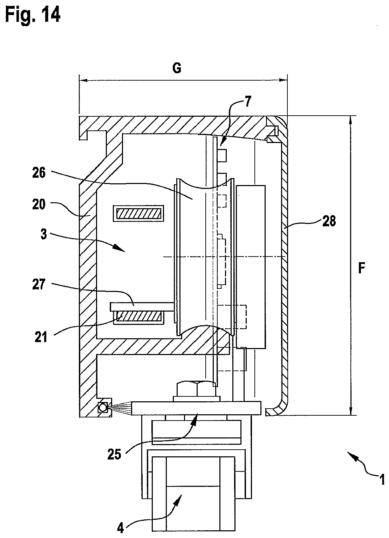

Figur 14 zeigt eine alternative Ansicht des Türantriebs 1 aus Figur 13. Wie zuvor beschrieben, kann mit derselben Antriebseinheit 3 wie im ersten Ausführungsbeispiel ein anderer Türantrieb 1 aufgebaut werden. Dazu wird die Antriebseinheit 3 an einer Stirnseite des Antriebsprofils 20 angeordnet. Analog zu dem ersten Ausführungsbeispiel beträgt somit die Gesamthöhe F des Türantriebs 1 100 Millimeter. Die Gesamttiefe G des Türantriebs 1 gemäß dem vierten Ausführungsbeispiel ist jedoch auf 70 Millimeter reduziert.

Wie auch im ersten Ausführungsbeispiel weist die Antriebseinheit 3 im vierten Ausführungsbeispiel Bedienelemente (in Figur 14 nicht sichtbar) auf, die zu einem Monteur weisen und von der Abdeckung 28 abdeckbar sind. Die den Bedienelementen gegenüberliegende Rückseite der Antriebseinheit 3 weist zu derselben Montagefläche wie die Rückseite des Antriebsprofils 20, beispielsweise zu einer Wand an welcher der Türantrieb 1 montiert ist.

Diejenige Fläche der Antriebseinheit 3, an welcher der Riemen 21 aus der Antriebseinheit 3 austritt, weist zu den Laufrollen 26 der Türflügel 4. Somit bewegen sich die Laufrollen auf besagte Fläche der Antriebseinheit 3 zu oder von dieser weg.

In dem vierten Ausführungsbeispiel ist der Riemen 21 hinter den Laufrollen 26 geführt, verglichen mit dem ersten Ausführungsbeispiel auf der gegenüberliegenden Seite der Laufrollen 26. Wiederum ist die Türanbindung 25 mit einem Mitnehmer 27 verbunden, die in den Riemen 21 eingreift. Durch die beschriebene Anordnung des Riemens 21 ist die sehr kompakte Ausführung des Türantriebs 1 mit den genannten Maßen ermöglicht.

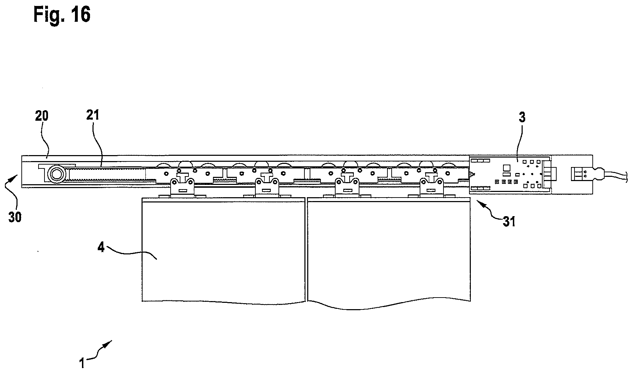

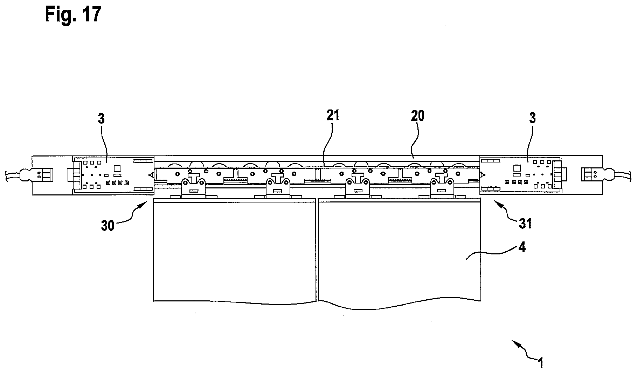

Die Figur 15 zeigt wiederum den Türantrieb 1 gemäß dem ersten Ausführungsbeispiel. Die Figuren 16 und 17 zeigen ein fünftes und ein sechste Ausführungsbeispiel des Türantriebs 1. Dabei zeigen wiederum gleich Bezugszeichen an, dass es sich um gleich oder gleichartige Bauelemente handelt.

Der einzige Unterschied zwischen dem ersten Ausführungsbeispiel, dem fünften Ausführungsbeispiel und dem sechsten Ausführungsbeispiel stellt die Anordnung der Antriebseinheit 3 dar. So weist das Antriebsprofil ein erstes Ende 30 und ein zweites Ende 31 auf. Aufgrund der Verwendung eines umlaufenden Riemens 21 ist es somit ermöglich, die Antriebseinheit 3 an dem ersten Ende 30 und/oder an dem zweiten Ende 31 flexibel einzusetzen.

In dem in Figur 15 gezeigten ersten Ausführungsbeispiel ist die Antriebseinheit 3 an dem ersten Ende 30 des Antriebsprofils 20 angeordnet, während in dem in Figur 16 gezeigten zweiten Ausführungsbeispiel die Antriebseinheit 3 an dem zweiten Ende 31 des Antriebsprofils 20 angeordnet ist. Somit ist der Türantrieb 1 je nach vorhandenem Platzangebot und sonstigen äußeren Umständen beliebig realisierbar.

Das in Figur 17 gezeigte sechste Ausführungsbeispiel des Türantriebs 1 verwendet zwei Antriebseinheiten 3, wobei eine Antriebseinheit 3 an dem ersten Ende 30 des Antriebsprofils 20 und eine andere Antriebseinheit 3 an dem zweiten Ende 31 des Antriebsprofils 20 angeordnet ist. Wie zuvor bereits beschrieben wurde, weist die Antriebseinheit 3 eine sehr geringe Selbsthemmung auf, so dass sich die Antriebseinheiten 3 im Betrieb nicht gegenseitig behindern, wenn lediglich eine der beiden Antriebseinheiten 3 zum Antrieb der Türflügel 4 verwendet wird. Alternativ können beide Antriebseinheiten 3 zum Antrieb der Türflügel 4 eingesetzt werden, um so auch schwere Türflügel 4 sicher und performant bewegen zu können. Auf jeden Fall ist durch das Vorsehen von zwei Antriebseinheiten 3 ein redundanter Türantrieb 1 realisiert. Sollte eine Antriebseinheit 3 ausfallen, so verbleibt eine weitere Antriebseinheit 3 zum Antreiben der Türflügel 4.

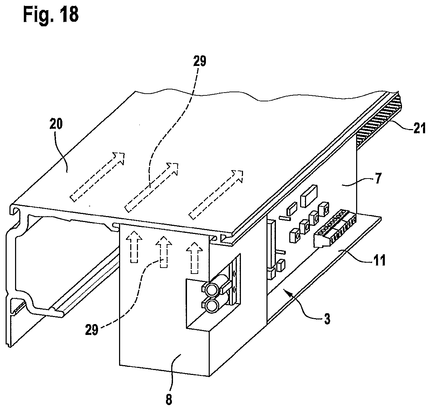

Figur 18 zeigt schließlich eine letzte schematische Ansicht des Türantriebs 1 gemäß dem ersten Ausführungsbeispiel. Dabei ist ersichtlich, dass das Antriebsprofil 20 einen Kühlkörper für die Antriebseinheit 3 darstellt. Dies ist insbesondere dadurch verbesserbar, dass ein wärmeleitfähiges Material zwischen Antriebsprofil 20 und Antriebseinheit 3 eingebracht ist. Somit erfolgt eine Wärmeableitung 29 aus der Antriebseinheit 3 in das Antriebsprofil 20. Aufgrund der Größe des Antriebsprofils 20 ist somit eine ausreichende Kühlung der Antriebseinheit 3 gewährleistet.

Insbesondere ist das Trägerelement 11 der Antriebseinheit 3 mit dem Antriebsprofil 20 verbunden. Da das Trägerelement 11 außerdem den elektrischen Antrieb 5 trägt, ist eine optimale Wärmeleitung von elektrischem Antrieb 5 über das Trägerelement 11 zu dem Antriebsprofil 20 vorhanden. Daher ist eine umfangreiche Kühlung des elektrischen Antriebs 5 realisiert, wodurch auch Hohe Leistungen in dem elektrischen Antrieb 5 umsetzbar sind. Auf diese Weise wird kein zusätzliches Kühlelement für den elektrischen Antrieb 5 benötigt.

Aus den Figuren und der obigen Beschreibung geht eindeutig hervor, dass der Türantrieb 1 gemäß der Erfindung einerseits flexibel einsetzbar, andererseits kostengünstig herstellbar ist. Außerdem erlaubt der Türantrieb 1 einen sicheren und zuverlässigen Betrieb. Schließlich ist für den Türantrieb 1 lediglich ein geringer Bauraum notwendig.

### Bezugszeichenliste

- 1: Türantrieb
- 2: Übertragungsvorrichtung
- 3: Antriebseinheit
- 4: Türflügel
- 5: elektrischer Antrieb
- 6: Abtrieb
- 7: Steuerungsvorrichtung
- 8: Netzteil
- 9: Verriegelungseinheit
- 10: Getriebe
- 11: Trägerelement
- 12: Ausnehmung
- 13: Bedienelemente
- 14: elektrische Anschlüsse
- 15: erste feststehende Achse
- 16: zweite feststehende Achse
- 17: erste Leiterkarte
- 18: zweite Leiterkarte
- 19: Kontaktelement
- 20: Antriebsprofil
- 21: Riemen
- 22: erster Bereich
- 23: zweiter Bereich
- 24: dritter Bereich
- 25: Türanbindung
- 26: Laufrolle
- 27: Mitnehmer
- 28: Abdeckung
- 29: Wärmeableitung
- 30: erstes Ende des Antriebsprofils
- 31: zweites Ende des Antriebsprofils
- 32: Längsachse des elektrischen Antriebs

- a: Abstand zwischen Riemen zu Rückseite
- b: Breite der Antriebseinheit
- h: Höhe der Antriebseinheit
- t: Tiefe der Antriebseinheit
- d: Durchmesser des elektrischen Antriebs
- e: Durchmesser des Abtriebs
- F: Gesamthöhe des Türantriebs
- G: Gesamttiefe des Türantriebs
- L: Achsabstand
- m: Stirnradhöhe

## Patentansprüche

1. Türantrieb (1) mit einer Antriebseinheit (3), wobei die Antriebseinheit (3) umfasst:
- zumindest einen elektrischen Antrieb (5),
- einen Abtrieb (6), der von dem elektrischen Antrieb (5) antreibbar ist und der mit einer Übertragungsvorrichtung (2) zur Bewegung von Türflügeln (4) verbindbar ist,
- eine Steuerungsvorrichtung (7), und
- ein Trägerelement (11),
wobei das Trägerelement (11) eine Vielzahl von Ausnehmungen (12) aufweist, in denen der elektrische Antrieb (5), der Abtrieb (6) und die Steuerungsvorrichtung (7) angeordnet sind,
**dadurch gekennzeichnet,**
**dass** der elektrische Antrieb (5) eine erste feststehende Achse (15) und der Abtrieb (6) eine zweite feststehende Achse (16) aufweisen, wobei die erste feststehende Achse (15) zur Lagerung des elektrischen Antriebs (5) dient und die zweite feststehende Achse (16) zur Lagerung des Abtriebes (6) auf dem Trägerelement (11) dient, wodurch ein einfach zu montierender wellenloser Antrieb und Abtrieb realisiert sind.

2. Türantrieb (1) nach Anspruch 1, **dadurch gekennzeichnet, dass** die Antriebseinheit (3) ein Netzteil (8) umfasst, wobei das Netzteil (8) in einer Ausnehmung (12) des Trägerelements (11) oder an einer Außenseite des Trägerelements (11) angeordnet ist.

3. Türantrieb (1) nach einem der vorhergehenden Ansprüche, **dadurch gekennzeichnet, dass** die Antriebseinheit (3) eine Verriegelungseinheit (9) umfasst, wobei die Verriegelungseinheit (9) in einer Ausnehmung (12) des Trägerelements (11) oder an einer Außenseite des Trägerelements (11) angeordnet ist.

4. Türantrieb (1) nach einem der vorhergehenden Ansprüche, **dadurch gekennzeichnet, dass** die Antriebseinheit (3) ein quaderförmiger Körper ist, wobei eine Höhe (h) der Antriebseinheit (3)
- maximal 120 Millimeter bei einem Gesamtgewicht der zu bewegenden Türflügel (4) von zumindest 600 Kilogramm,
- maximal 90 Millimeter bei einem Gesamtgewicht der zu bewegenden Türflügel (4) von zumindest 400 Kilogramm, und
- maximal 60 Millimeter bei einem Gesamtgewicht der zu bewegenden Türflügel (4) von zumindest 240 Kilogramm beträgt,
- und eine Tiefe (t) der Antriebseinheit (3) maximal 60 Millimeter beträgt.

5. Türantrieb (1) nach einem der vorgenannten Ansprüche, **dadurch gekennzeichnet, dass** die erste feststehende Achse (15) und die zweite feststehende Achse (16) an dem Trägerelement (11) befestigt sind, insbesondere in das Trägerelement (11) eingepresst und/oder mit dem Trägerelement (11) verschraubt und/oder mit dem Trägerelement (11) verklebt sind.

6. Türantrieb (1) nach einem der vorgenannten Ansprüche, **dadurch gekennzeichnet, dass** die erste feststehende Achse (15) parallel zu der zweiten feststehenden Achse (16) angeordnet ist, wobei ein Achsabstand (L) zwischen der ersten feststehenden Achse (15) und der zweiten feststehenden Achse (16) bevorzugt zumindest der Hälfte der Summe aus Durchmesser (d) des elektrischen Antriebs (5) und Durchmesser (e) des Abtriebs (6) entspricht.

7. Türantrieb (1) nach einem der vorgenannten Ansprüche, **dadurch gekennzeichnet, dass** erste feststehende Achse (15) und die zweite feststehende Achse (16) rechtwinklig oder im Wesentlichen rechtwinklig zu einer Bewegungsrichtung der Türflügel (4) ausgerichtet sind.

8. Türantrieb (1) nach einem der vorgenannten Ansprüche, mit einem Antriebsprofil (20) wobei die Antriebseinheit (3) an dem Antriebsprofil (20) angebracht ist,
- wobei innerhalb des Antriebsprofils (20) die Übertragungsvorrichtung (2), insbesondere ein Riemen (21), angeordnet ist, die von dem Abtrieb (6) antreibbar ist,
- wobei an dem Antriebsprofil (20) die Türflügel (4) lagerbar sind, die von der Übertragungsvorrichtung (2) bewegbar sind, und
- wobei eine Gesamttiefe (G) des Türantriebs (1), die insbesondere parallel zu der Längsachse (32) und/oder senkrecht zu den Türflügeln (4) messbar ist, maximal 160 Millimeter, bevorzugt maximal 70 Millimeter beträgt.

9. Türantrieb (1) nach Anspruch 8, **dadurch gekennzeichnet, dass** eine erste Antriebseinheit (3) an einem ersten Ende (30) des Antriebsprofils (20) und/oder eine zweite Antriebseinheit (3) an einem zweiten Ende (31) des Antriebsprofils (20) angebracht ist, wobei die erste Antriebseinheit (3) insbesondere zu der zweiten Antriebseinheit (3) identisch aufgebaut ist.

10. Türantrieb (1) nach einem der Ansprüche 8 oder 9, **dadurch gekennzeichnet, dass** zwischen Antriebseinheit (3) und Antriebsprofil (20) ein wärmeleitendes Material eingebracht ist.

11. Türantrieb (1) nach einem der Ansprüche 8 bis 10, **dadurch gekennzeichnet, dass** die Antriebseinheit (3) an einer Stirnseite oder an einer Längsseite des Antriebsprofils (20) angebracht ist.

12. Türantrieb (1) nach einem der Ansprüche 8 bis 11, **dadurch gekennzeichnet, dass** ein Abstand (K) zwischen einer parallel zu der Übertragungsvorrichtung (2) verlaufenden Rückseite der Antriebseinheit (3) und der Übertragungsvorrichtung (2) maximal 30 Millimeter, insbesondere maximal 20 Millimeter beträgt.

13. Türantrieb (1) nach einem der Ansprüche 8 bis 12, **dadurch gekennzeichnet, dass** die Antriebseinheit (3) derart an dem Antriebsprofil (20) befestigt ist, dass die Steuerungsvorrichtung (7) von dem Antriebsprofil (20) wegweist.

## Claims

1. A door drive (1) with a drive unit (3), wherein the drive unit (3) comprises:
• at least one electrical drive (5),
• an output (6), which is drivable by the electric drive (5) and connectable to a transmission device (2) for moving door leaves (4),
• a control device (7), and
• a carrier element (11),
wherein the carrier element (11) includes a plurality of recesses (12), in which the electric drive (5), the output (6) and the control device (7) are disposed,
**characterized in**
**that** the electric drive (5) includes a first stationary axis (15) and the drive (6) a second stationary axis (16), wherein the first stationary axis (15) serves for supporting the electric drive (5) and the second stationary axis (16) for supporting the output (6) on the carrier element (11), whereby realising a shaftless drive and output which are easy to mount.

2. The door drive (1) according to claim 1, **characterized in that** the drive unit (3) comprises a power unit (8), wherein the power unit (8) is disposed in a recess (12) of the carrier element (11) or at an outside of the carrier element (11).

3. The door drive (1) according to any of the preceding claims, **characterized in that** the drive unit (3) comprises an interlocking unit (9), wherein the interlocking unit (9) is disposed in a recess (12) of the carrier element (11) or at an outside of the carrier element (11).

4. The door drive (1) according to any of the preceding claims, **characterized in that** the drive unit (3) is a cuboidal body, wherein a height (h) of the drive unit (3) amounts
• at maximum to 120 millimeters for a total weight of the door leaves (4) to be moved of at least 600 kilograms,
• at maximum to 90 millimeters for a total weight of the door leaves (4) to be moved of at least 400 kilograms,
• at maximum to 60 millimeters for a total weight of the door leaves (4) to be moved of at least 240 kilograms,
• and a depth (t) of the drive unit (3) amounts at maximum to 60 millimeters.

5. The door drive (1) according to any of the aforementioned claims, **characterized in that** the first stationary axis (15) and the second stationary axis (16) are attached to the carrier element (11), in particular are press-fitted into the carrier element (11) and/or screwed to the carrier element (11) and/or bonded to the carrier element (11).

6. The door drive (1) according to any of the aforementioned claims, **characterized in that** the first stationary axis (15) is disposed parallel to the second stationary axis (16), wherein an axis distance (L) between the first stationary axis (15) and the second stationary axis (16) preferably corresponds to half the sum of the diameter (d) of the electric drive (5) and the diameter (e) of the output (6).

7. The door drive (1) according to any of the aforementioned claims, **characterized in that** the first stationary axis (15) and the second stationary axis (16) are oriented rectangularly or essentially rectangularly to a direction of movement of the door leaves (4).

8. The door drive (1) according to any of the aforementioned claims, with a drive profile (20), which the drive unit (3) is affixed to the drive profile (20),
• wherein the transmission device (2), in particular a belt (21), is disposed within the drive profile (20), which device is drivable by the output (6),
• wherein the door leaves (4), which the transmission device (2) is able to move, are supportable at the drive profile (20), and
• wherein a total depth (G) of the door drive (1), which in particular is measurable parallel to the longitudinal axis (32) and/or vertically to the door leaves (4), at maximum amounts to 160 millimeters, preferably at maximum to 70 millimeters.

9. The door drive (1) according to claim 8, **characterized in that** a first drive unit (3) is affixed to a first end (30) of the drive profile (20) and/or a second drive unit (3) to a second end (31) of the drive profile (20), wherein the first drive unit (3) is built identical in particular to the second drive unit (3).

10. The door drive (1) according to any of the claims 8 or 9, **characterized in that** heat-conducting material is placed between the first drive unit (3) and the drive profile (20).

11. The door drive (1) according to any of the claims 8 to 10, **characterized in that** the drive unit (3) is affixed to a front face or to a long side of the drive profile (20).

12. The door drive (1) according to any of the claims 8 to 11, **characterized in that** a distance (K) between a rear side of the drive unit (3), side extending parallel to the transmission device (2), and the transmission device (2) amounts at maximum to 30 millimeters, in particular at maximum to 20 millimeters.

13. The door drive (1) according to any of the claims 8 to 12, **characterized in that** the drive unit (3) is attached to the drive profile (20) such that the control device (7) faces away from the drive profile (20).

## Revendications

1. Entraînement de porte (1) avec une unité d'entraînement (3), l'unité d'entraînement (3) comportant :
• au moins un entraînement électrique (5),
• une sortie (6) entraînable par l'entraînement électrique (5) et laquelle est connectable à un dispositif de transmission (2) pour mouvoir des vantaux de porte (4),
• un dispositif de contrôle (7), et
• un élément de support (11),
l'élément de support (11) comprenant une pluralité d'évidements (12), dans lesquels l'entraînement électrique (5), la sortie (6) et le dispositif de contrôle (7) sont agencés,
**caractérisé en ce**
**que** l'entraînement électrique (5) comprend un premier axe fixe (15) et la sortie (6) un deuxième axe fixe (16), le premier axe fixe (15) servant à supporter l'entraînement électrique (5) et le deuxième axe fixe (16) servant à supporter la sortie (6) sur l'élément de support (11) ainsi réalisant un entraînement et une sortie sans arbre facile à monter.

2. Entraînement de porte (1) selon la revendication 1, **caractérisé en ce que** l'unité d'entraînement (3) comporte un bloc d'alimentation (8), le bloc d'alimentation (8) étant agencé dans un évidement (12) de l'élément de support (11) ou sur une face extérieure de l'élément de support (11).

3. Entraînement de porte (1) selon l'une des revendications précédentes, **caractérisé en ce que** l'unité d'entraînement (3) comporte une unité de verrouillage (9), l'unité de verrouillage (9) étant agencée dans un évidement (12) de l'élément de support (11) ou sur une face extérieure de l'élément de support (11).

4. Entraînement de porte (1) selon l'une des revendications mentionnées ci-avant, **caractérisé en ce que** l'unité d'entraînement (3) est un corps parallélépipède, une hauteur (h) de l'unité d'entraînement (3) s'élevant
• au maximum à 120 mm pour un poids total des vantaux de porte (4) à mouvoir au moins de 600 kilogrammes,
• au maximum à 90 mm pour un poids total des vantaux de porte (4) à mouvoir au moins de 400 kilogrammes,
• au maximum à 60 mm pour un poids total des vantaux de porte (4) à mouvoir au moins de 240 kilogrammes,
• et une profondeur (t) de l'unité d'entraînement (3) au maximum à 60 millimètres.

5. Entraînement de porte (1) selon l'une des revendications mentionnées ci-avant, **caractérisé en ce que** le premier axe fixe (15) et le deuxième axe fixe (16) sont attachés sur l'élément de support (11), tout particulièrement sont pressés dans l'élément de support (11) et/ou sont vissés sur l'élément de support (11) et/ou sont collés à l'élément de support (11).

6. Entraînement de porte (1) selon l'une des revendications mentionnées ci-avant, **caractérisé en ce que** le premier axe fixe (15) est agencé parallèle au deuxième axe fixe (16), une distance entre-axes (L) entre le premier axe fixe (15) et le deuxième axe fixe (16) correspondant de préférence au moins à la moitié de la somme du diamètre (d) de l'entraînement électrique (5) et du diamètre (e) de la sortie (6).

7. Entraînement de porte (1) selon l'une des revendications mentionnées ci-avant, **caractérisé en ce que** le premier axe fixe (15) et le deuxième axe fixe (16) sont orientés rectangulairement ou essentiellement rectangulairement à une direction de mouvement des vantaux de porte (4).

8. Entraînement de porte (1) selon l'une des revendications mentionnées ci-avant, avec un profilé d'entraînement (20), l'unité d'entraînement (3) étant montée sur le profilé d'entraînement (20),
« un dispositif de transmission (2), tout particulièrement une courroie (21) entraînable par la sortie (6), étant agencé au sein du profilé d'entraînement (20), les vantaux de porte (4), qui sont déplaçables par le dispositif de transmission (2), étant supportables sur le profilé d'entraînement (20), et
« une profondeur totale (G) de l'entraînement (1) de porte, qui tout particulièrement est mesurée parallèle à l'axe longitudinal (32) et/ou verticalement aux vantaux de porte (4), de préférence s'élève au maximum à 70 millimètres.

9. Entraînement de porte (1) selon la revendication 8, **caractérisé en ce qu'**une première unité d'entraînement (3) est montée sur une première extrémité (30) du profilé d'entraînement (20) et/ou une deuxième unité d'entraînement (3) sur une deuxième extrémité (31) du profilé d'entraînement (20), tout particulièrement la première unité d'entraînement (3) étant constituée identiquement à la deuxième unité d'entraînement (3).

10. Entraînement de porte (1) selon l'une des revendications 8 ou 9, **caractérisé en ce que** de la matière conduisant la chaleur est introduite entre l'unité d'entraînement (3) et le profilé d'entraînement (20).

11. Entraînement de porte (1) selon l'une des revendications 8 à 10, **caractérisé en ce que** l'unité d'entraînement (3) est montée sur une face frontale ou d'un grand côté du profilé d'entraînement (20).

12. Entraînement de porte (1) selon l'une des revendication 8 à 11, **caractérisé en ce qu'**une distance (K) entre une face arrière, s'étendant de façon parallèle au dispositif de transmission (2), de l'unité d'entraînement (3) et le dispositif de transmission (2) s'élève au maximum à 30 millimètres, tout particulièrement au maximum à 20 millimètres.

13. Entraînement de porte (1) selon la revendication 8 à 12, **caractérisé en ce que** l'unité d'entraînement (3) est attachée de telle façon sur le profilé d'entraînement (20) que le dispositif de contrôle (7) est détourné du profilé d'entraînement (20).
